# EUROPÄISCHE PATENTANMELDUNG

(11) **EP 3 726 455 A2**
(43) Veröffentlichungstag der Anmeldung: **21.10.2020**
(21) Anmeldenummer: 20169103.7
(22) Anmeldetag: 09.04.2020
(51) Int. Cl.: G06Q 50/30, G06Q 10/02, B60L 53/30, B60L 53/62, B60L 53/63, B60L 53/65, B60L 53/66, B60L 53/67, B60L 53/68, G06Q 10/06

(54) **VERFAHREN ZUR PROGNOSE EINER VERFÜGBARKEIT WENIGSTENS EINER LADESTATION FÜR EIN ELEKTROFAHRZEUG**

(30) Priorität: 18.04.2019 DE 102019205713
(71) Anmelder: VOLKSWAGEN AG, 38440 Wolfsburg (DE)
(72) Erfinder: STICHOWSKI, Torsten, 39128 Magdeburg (DE); SCHREINER, Dimitri, 38116 Braunschweig (DE); KICZINSKI, Daniel Niklas, 38165 Lehre (DE); LANGE, Andreas, 38106 Braunschweig (DE)
(74) Vertreter: FDST Patentanwälte

(57) **Zusammenfassung**

Die Erfindung nennt ein Verfahren zur Prognose einer Verfügbarkeit wenigstens einer Ladestation (16a-c) für ein Elektrofahrzeug (1, 2, 26, 28, 30), wobei für eine Mehrzahl an Elektrofahrzeugen (1, 2, 26, 28, 30) jeweils ein konkreter Ladebedarf ermittelt wird, wobei jedes der Elektrofahrzeuge (1, 2, 26, 28, 30) in Abhängigkeit des konkreten Ladebedarfs eine Anfrage (20a-e) hinsichtlich einer Verfügbarkeit wenigstens einer Ladestation (16a-c) ausgibt, und wobei für die wenigstens eine Ladestation (16a-c) anhand der Anfragen (20a-e) der Elektrofahrzeuge (1, 2, 26, 28, 30) eine reale Nachfrage nach einem Ladevorgang abgeschätzt wird, und hieraus eine erste Wahrscheinlichkeit für eine Verfügbarkeit der wenigstens einen Ladestation (16a-c) zu einem zukünftigen Zeitpunkt ermittelt wird. Die Erfindung nennt weiter ein entsprechendes Verfahren zur assistierten Buchung einer Ladestation für ein Elektrofahrzeug (1, 2, 26, 28, 30).

## Beschreibung

Die Erfindung betrifft ein Verfahren zur Prognose einer Verfügbarkeit wenigstens einer Ladestation für ein Elektrofahrzeug, wobei für die wenigstens eine Ladestation eine reale Nachfrage nach einem Ladevorgang abgeschätzt wird, und hieraus eine erste Wahrscheinlichkeit für eine Verfügbarkeit der wenigstens einen Ladestation zu einem zukünftigen Zeitpunkt ermittelt wird. Die Erfindung betrifft weiter ein Verfahren zur assistierten Buchung einer Ladestation für ein Elektrofahrzeug.

Elektrofahrzeuge verfügen gegenwärtig über eine geringere Reichweite als Kraftfahrzeuge mit Verbrennungsmotor. Während letztgenannte oftmals eine Reichweite im hohen dreistelligen Kilometerbereich aufweisen, liegt die Reichweite von Elektrofahrzeugen üblicherweise im Bereich von wenigen Hundert km. Erschwerend kommt für eine Nutzung von Elektrofahrzeugen für Langstreckenfahrten hinzu, dass der Zeitbedarf zum Nachladen von elektrischer Energie an einer Ladesäule wesentlich höher ist als eine Tankzeit von Otto- oder Dieselkraftstoff. Aus diesem Grund ist es für Benutzer von Elektrofahrzeugen von besonderer Bedeutung, Ladevorgänge möglichst verlässlich planen zu können.

In diesem Zusammenhang erlaubt eine verbindliche Buchung einer Ladesäule, an dieser innerhalb eines bestimmten Zeitfensters mit im Wesentlichen vollständiger Sicherheit laden zu können. Aufgrund von unvorhersehbaren Ereignissen kann es jedoch passieren, dass eine fest gebuchte Ladesäule nicht zur angestrebten Zeit erreicht werden kann, beispielsweise infolge eines Staus. Auf der Ebene einer gesamten Fahrzeugflotte an Elektrofahrzeugen führen dabei Buchungen von Ladestationen, welche letztendlich nicht für einen ursprünglich gebuchten Ladevorgang genutzt werden, zu einem Erfordernis, eine größerer Anzahl an Ladestationen als tatsächlich für Ladevorgänge benötigt bereitzustellen. Wenn eine Buchung kostenpflichtig ist, können hierbei zudem einerseits Ausfall- oder Stornierungskosten anfallen, sowie ggf. zusätzlich weitere Buchungsgebühren entstehen, wenn ersatzweise eine neue kostenpflichtige Buchung an einer anderen Ladesäule durchgeführt werden muss. Dies ist für einen Fahrer eines Elektrofahrzeugs insbesondere dann nicht optimal, wenn eine Buchung aufgrund eines temporären Überangebots an Ladesäulen zum gewünschten Buchungszeitraum gar nicht erforderlich gewesen wäre. Andererseits ist es für einen Fahrer eines Elektrofahrzeugs ungünstig, auf eine Buchung dann zu verzichten, wenn alle Ladesäulen der infrage kommenden Ladestation ausgelastet sind.

Gegenwärtig kann ein Teil von Ladesäulen ihren aktuellen Status über einen Internet-basierten Dienst zur Verfügung stellen. Somit können andere Verkehrsteilnehmer über den Dienst erfahren, ob eine Ladesäule aktuell zur Verfügung steht oder nicht. Ist hierbei in den Dienst ein Buchungssystem integriert, kann dabei auch mitgeteilt werden, ob für eine Ladesäule zu einem konkreten Zeitpunkt bereits eine feste Buchung vorliegt. Derartige Informationen betreffen jedoch nur den aktuellen Ist- Zustand hinsichtlich der stattfindenden und bereits verbindlich gebuchten Ladevorgänge, tragen aber nicht der realen Nachfragesituation zum gewünschten Ladezeitpunkt im für den Ladevorgang angestrebten räumlichen Bereich Rechnung.

Der Erfindung liegt daher die Aufgabe zugrunde, für Ladestationen von Elektrofahrzeugen ein Verfahren anzugeben, welches eine möglichst genaue Prognose der Verfügbarkeit einer Ladestation zu einem zukünftigen Zeitpunkt erlaubt. Der Erfindung liegt zudem die Aufgabe zugrunde, für ein Elektrofahrzeug ein Verfahren zur assistierten Buchung einer Ladestation anzugeben, welches benötigte Ladevorgänge möglichst zuverlässig identifiziert, und dabei kostenpflichtige Buchungen von Ladestationen verringert.

Die erstgenannte Aufgabe wird erfindungsgemäß gelöst durch ein Verfahren zur Prognose einer Verfügbarkeit wenigstens einer Ladestation für ein Elektrofahrzeug, wobei für eine Mehrzahl an Elektrofahrzeugen jeweils ein konkreter Ladebedarf ermittelt wird, wobei jedes der Elektrofahrzeuge in Abhängigkeit des konkreten Ladebedarfs eine Anfrage hinsichtlich einer Verfügbarkeit wenigstens einer Ladestation ausgibt, und wobei für die wenigstens eine Ladestation anhand der Anfragen der Elektrofahrzeuge eine reale Nachfrage nach einem Ladevorgang abgeschätzt wird, und hieraus eine erste Wahrscheinlichkeit für eine Verfügbarkeit der wenigstens einen Ladestation zu einem zukünftigen Zeitpunkt ermittelt wird.

Unter einer Verfügbarkeit einer Ladestation für ein Elektrofahrzeug ist hierbei insbesondere zu verstehen, dass an der betreffenden Ladestation für eine konkreten Zeitraum ein weiterer Ladevorgang durchgeführt werden kann, und dass also nicht sämtliche Ladeanschlüsse bzw. -kabel an allen einzelnen Ladesäulen der Ladestation belegt sind, oder für die noch freien Ladeanschlüsse bereits verbindliche Buchungen und somit Reservierungen vorliegen, sodass dort kein weiterer Ladevorgang mehr garantiert werden kann. In diesem Sinne ist ein konkreter Ladebedarf insbesondere auf einen bestimmten Zeitraum oder ein bestimmtes Zeitfenster einschränkbar, sowie räumlich auf eine oder einige wenige Ladestationen einschränkbar. Das Ermitteln des konkreten Ladebedarfs besteht somit insbesondere darin, bevorzugt anhand eines Ladestands eines Elektrofahrzeug und einer daraus resultierenden Reichweite sowie weiteren Informationen eine Startzeit und ggf. auch eine Ladedauer sowie einen räumlichen Bereich, in welchem der nächste Ladevorgang erfolgen wird, entsprechend der oben beschriebenen Überlegungen hinreichend eng einzuschränken.

Die Ausgabe der Anfrage erfolgt hierbei bevorzugt durch ein entsprechendes Kommunikationssystem des Elektrofahrzeugs, welches mit einer Rechnereinheit zum Ermitteln des konkreten Ladebedarfs in Verbindung steht. Eine derartige Rechnereinheit kann hierbei insbesondere eine Verwaltung und Überwachung eines Ladestands sowie vergleichbare Funktionen umsetzen, und beispielsweise in ein umfassendes Fahrtmanagement-System integriert sein, in welches bevorzugt auch ein Navigationssystem des Elektrofahrzeugs integriert ist. Die Anfrage kann dabei an die Ladestation und/oder an ein zentrales Steuer- bzw. Verteilungssystem von Ladestationen ausgegeben werden. Im ersten Fall kann die Ladestation, ggf. unter Hinzuziehung von vorher in einer Rechnereinheit der Ladestation eingespeicherten statistischen Daten über Anfragen und Ladevorgänge an anderen Ladesäulen, eine reale Nachfrage abschätzen.

Bevorzugt wird jedoch eine reale Nachfrage in einem zentralen Steuer- bzw. Verteilungssystem von Ladestationen anhand der Anfragen ermittelt. Der Begriff eines zentralen Steuer- bzw. Verteilungssystems soll hierbei nicht notwendigerweise eine zentralisierte Rechnerstruktur suggerieren, vielmehr soll hierbei das zentrale Erfassen der Anfragen und gegebenenfalls weiterer Informationen über eine Mehrzahl an räumlich getrennten Ladestationen als Funktion im Vordergrund stehen. Insofern kann hierbei das zentrale Steuer- bzw. Verteilungssystem insbesondere auch über ein Cloud-Netzwerk implementiert sein.

Die Anfrage ist hierbei insbesondere als ein unverbindlicher Vorgang des Informationsaustausches ohne jegliche feste Buchung oder Reservierung implementiert. Für die Mehrzahl an Elektrofahrzeugen wird nun der konkrete Ladebedarf ermittelt. Dieser lässt sich beispielsweise anhand des aktuellen Ladestandes und der daraus resultierenden maximalen Reichweite sowie anhand von Informationen über einen geplanten oder geschätzten Fahrweg des Elektrofahrzeugs ermitteln. Ist beispielsweise eine Fahrtroute eines gegebenen Elektrofahrzeugs mit hinreichend hoher Wahrscheinlichkeit bekannt, z.B. durch ein in ein Navigationssystem des Elektrofahrzeugs eingegebenes Fahrtziel (und der vernünftigen Annahme, dass dieses Fahrtziel auch wirklich angesteuert wird), können mit dieser Information entlang einer vom Navigationssystem vorgeschlagenen oder sonst als wahrscheinlich bestimmten Fahrtroute innerhalb der maximalen Reichweite gelegene Ladestationen als Gegenstand der konkreten Nachfrage ermittelt werden. Weitere zusätzliche Informationen oder begründete bzw. statistisch begründbare Annahmen, wie z.B. die Annahme, dass ein Ladevorgang erst unterhalb eines bestimmten Ladestands durchgeführt wird, da aus technischen Gründen ein möglichst vollständiges Entleeren der Batterie wünschenswert ist, erlauben ggf. eine noch weiter gehende Einschränkung der in Frage kommenden Ladestationen.

Sind sämtliche zur Verfügung stehenden Informationen über die Fahrtroute sowie ggf. die zusätzlichen Annahmen verarbeitet, liegt ein konkreter Ladebedarf vor, welcher einen gewünschten oder angestrebten Ladevorgang an einer von einigen wenigen Ladestationen zu einem jeweils konkreten Zeitpunkt (mit Unsicherheiten insbesondere bis zu deutlich unterhalb einer Stunde) repräsentiert. Anhand der entsprechenden Anfragen und den diesen wenigstens implizit zugeordneten Ladestationen kann nun abgeschätzt werden, wie für einen gewünschten Ladezeitpunkt bei der jeweiligen betreffenden Ladestation eine reale Nachfragesituation sein wird, und eine entsprechende Wahrscheinlichkeit für eine vollständige Auslastung oder für eine Verfügbarkeit der Ladestation angegeben werden. Diese Wahrscheinlichkeit kann dann für eine Planung des Ladevorgangs eines einzelnen Elektrofahrzeugs, entsprechend seinem konkreten Ladebedarf, verwendet werden.

Hierbei wird in vorteilhafter Weise einerseits der Umstand ausgenutzt, dass eine Prognose anhand einer Mehrzahl an Anfragen getroffen wird. Es wird so zusagen eine Art "Schwarmanfrage" an einzelne Ladestationen generiert, welche zum Abschätzen der realen Nachfrage verwendet wird. Der Zusammenhang der Schwarmanfrage mit der realen Nachfrage ergibt sich dabei andererseits aus dem konkreten Ladebedarf, welcher jeweils der Anfrage zugrunde liegt: In der Anfrage muss noch kein Buchungsvorgang vorliegen - auch wenn bereits real erfolgte Buchungen ebenfalls als zusätzliche Anfragen für die Prognose der realen Nachfrage hinzugezogen werden können - jedoch ist das Bedürfnis der Anfrage hinreichend konkret, um diese mit einem realen Ladevorgang zu assoziieren, welcher in naher Zukunft unter den in der Anfrage genannten Orts- und Zeitparametern mit hoher Wahrscheinlichkeit erfolgen muss. Insofern können hierdurch insbesondere Überbuchungen vermieden werden, welche durch Buchungsvorgänge entstehen, die lediglich infolge einer ungenauen Vorhersage einer Verfügbarkeit von Ladestationen zu einem zukünftigen Zeitpunkt für ein bestimmtes Gebiet getätigt werden, um sicher eine Ladestation zur Verfügung zu haben, ohne dass der Ladevorgang am Ende tatsächlich durchgeführt wird, oder die aufgrund von unvorhersehbaren Ereignissen wie z.B. Staus etc. nicht genutzt werden können. Somit kann auf vorteilhafte Weise die Anzahl an erforderlichen Ladestationen für eine bestimmte Flottengröße von Elektrofahrzeugen verringert werden, da weniger Ladestationen für derartige Überbuchungen vorgehalten werden müssen.

Insbesondere kann dabei eine zusätzliche Abschätzung einer Skalierung der Anfragen erfolgen, welche dem Umstand Rechnung trägt, dass ggf. nicht alle Elektrofahrzeuge, welche einen Ladebedarf haben, eine Anfrage ausgeben (z.B. weil das entsprechende Fahrzeugmodell nicht in ein das Verfahren durchführendes System eingebunden ist), und somit die reale Nachfrage entsprechend höher ist, als alle für einen bestimmten Zeitpunkt zu einer konkreten Ladestation eingehenden Anfragen (ggf. jeweils fahrzeugweise gewichtet mit einer entsprechenden Wahrscheinlichkeit, falls ein Ladebedarf auch von anderen Ladestationen bewältigt werden kann).

Bevorzugt wird jeweils für ein Elektrofahrzeug eine Fahrtroute ermittelt oder abgeschätzt und/oder ein Ladestand und somit wenigstens ein Näherungswert für eine maximale Reichweite ermittelt, wobei der konkrete Ladebedarf anhand der ermittelten oder abgeschätzten Fahrtroute und/oder anhand des Ladestands ermittelt wird. Unter einem Ermitteln sei hierbei und generell insbesondere zu verstehen, dass die zu ermittelnde Größe, also vorliegend die Fahrtroute, aus den vorliegenden Informationen in deterministischer Weise ergibt, und also insbesondere Unsicherheiten, welche lediglich zu probabilistischen Angaben führen, aus den Informationen resultieren. Entsprechend ist unter einem Abschätzen insbesondere zu verstehen, dass die abzuschätzende Größe aus den vorliegenden Informationen nur mit einer Unsicherheit behaftet bestimmt werden kann, selbst wenn die Informationen selbst keine Unsicherheit aufweisen. In diesem Fall kann insbesondere die abzuschätzende Größe mit einem entsprechenden Wahrscheinlichkeitswert angegeben werden.

Zweckmäßigerweise wird dabei die Fahrtroute anhand einer Eingabe eines Fahrtziels in ein Navigationssystem ermittelt, oder es wird eine aktuelle Position des Elektrofahrzeugs ermittelt und die Fahrtroute des Elektrofahrzeugs anhand der ermittelten aktuellen Position und insbesondere einer Streckenführung in der Umgebung der aktuellen Position abgeschätzt. Eine Eingabe eines Fahrtziels in einem Navigationssystem kann hierbei, insbesondere in Verbindung mit einer durch das Navigationssystem vorgeschlagenen Fahrtroute, als ein besonders zuverlässiger Indikator für die Fahrtroute interpretiert werden. Doch auch wenn keine derartige Eingabe vorliegt, kann anhand der aktuellen Position des Fahrzeugs, und ggf. anhand von weiteren Informationen, eine mutmaßliche Fahrtroute abgeschätzt werden.

Bevorzugt werden dabei für ein Abschätzen der Fahrtroute eines Fahrers des Elektrofahrzeugs Daten, welche vom Fahrer in einem elektronischen Terminkalender und/oder in sozialen Netzwerken, insbesondere in entsprechenden Veranstaltungs- und/oder Terminfunktionen eines sozialen Netzwerks, vermerkt wurden, herangezogen. Derartige Daten können, wenn sie auf einen Termin oder eine Veranstaltung zu einem bestimmten Zeitpunkt an einem bestimmten Ort hindeuten, als ein Indikator der Fahrtroute herangezogen werden, wobei ggf. ein Unsicherheitsfaktor dahingehend mit zu berücksichtigen ist, ob einerseits der Temin tatsächlich wahrgenommen wird, und welche Fahrtroute zum dem Termin oder der Veranstaltung entsprechenden Ort tatsächlich gewählt wird, da hier - anders als im Fall des Navigationssystems - kein konkreter Vorschlag einer Fahrtroute mit dem mutmaßlichen Termin bzw. der mutmaßlichen Veranstaltung assoziiert ist. Ein entsprechender Unsicherheits- bzw. Wahrscheinlichkeitsfaktor lässt sich hierbei bevorzugt aus einem statistischen Modell gewinnen, welches das Verhalten einer Vielzahl an Fahrern analysiert, und/oder anhand einer individuellen Statistik über den spezifischen Fahrer des betreffenden Elektrofahrzeugs.

Als weiter vorteilhaft erweist es sich, wenn für einen konkreten Ladebedarf ein Wahrscheinlichkeitswert dafür ermittelt wird, zu einem bestimmten Zeitpunkt, und insbesondere für eine bestimmte Mindestdauer, innerhalb eines räumlich begrenzten Bereiches, welcher bevorzugt eine Anzahl an Ladestationen umfasst, einen Ladevorgang durchzuführen oder durchführen zu müssen. Ein Wahrscheinlichkeitswert dafür, dass ein Ladevorgang tatsächlich durchzuführen ist, kann dabei insbesondere unter der Prämisse abgeschätzt werden, dass eine Batterie aus technischen Gründen möglichst immer bis zur größtmöglichen Entladung gefahren wird. Ein Wahrscheinlichkeitswert dafür, dass ein Ladevorgang durchgeführt werden muss, kann in Abhängigkeit des Szenarios abgeschätzt werden, dass sonst eine Weiterfahrt infolge einer vollständigen Batterieentladung nicht mehr möglich wäre. Ein derartiger, für einen konkreten Ladebedarf ermittelter Wahrscheinlichkeitswert, welcher insbesondere direkt mit einer bestimmten Ladestation verbunden sein kann, wird bevorzugt mit der Anfrage ausgegeben, um bei einem Abschätzen der realen Nachfrage an einer Ladestation als probabilistischer Wert mit einbezogen werden zu können.

Zweckmäßigerweise wird für die Mehrzahl an Elektrofahrzeugen nach einer jeweiligen Anfrage ein Ladevorgang, also insbesondere Information über die jeweilige Ladestation sowie über Ladezeitpunkt und -dauer, erfasst, wobei anhand der erfassten Ladevorgänge der Elektrofahrzeuge und anhand der entsprechenden Anfragen ein erstes statistisches Modell entwickelt wird, und wobei das erste statistische Modell für die Abschätzung der realen Nachfrage anhand der Anfragen herangezogen wird. Dieses erste statistische Modell erlaubt es insbesondere, eine Qualität des Ermittelns des konkreten Ladebedarfs auf der Ebene der einzelnen Elektrofahrzeuge zu überprüfen. Überdies erlaubt das erste statistische Modell eine Interpolation der Anfragen von Elektrofahrzeugen, welche in das Verfahren eingebunden sind, auf den Ladebedarf von sämtlichen Elektrofahrzeugen, also auch denjenigen, welche nicht vom Verfahren erfasst sind und somit auch keine Anfragen, jedoch nichtsdestoweniger eine reale Nachfrage an den einzelnen Ladestationen generieren.

Hierfür werden bevorzugt in das erste statistische Modell hinsichtlich jeweils einer einen konkreten Ladebedarf repräsentierenden Anfrage und ihrer entsprechenden Zuordnung zu einem erfassten Ladevorgang individuelle Muster auf der Ebene einzelner Fahrer der zweiten Elektrofahrzeuge und/oder modellspezifische Muster auf der Ebene einer gegebenen Baureihe und/oder herstellerspezifische Muster auf der Ebene einer Fahrzeugflotte eines Herstellers mit einbezogen. Die individuellen Muster auf der Ebene einzelner Fahrer können hierbei jeweils Vorlieben eines einzelnen Fahrers beinhalten, die bei einem Bestimmen der realen Nachfrage berücksichtigt werden können, wenn z.B. festgestellt werden kann, dass ein Fahrer signifikant häufiger Ladestationen aufsucht, welche ein Restaurant o.ä. in der Nähe aufweisen. In diesem Fall verändert sich zwar nicht der konkrete Ladebedarf, jedoch ist eine reale Nachfrage bei einer entsprechenden Ladestation, welche die Vorlieben des einzelnen Nutzers erfüllt, wahrscheinlicher.

Modellspezifische Muster können beispielsweise in der statistischen Häufung von Ladevorgängen für Kombis in der Nähe vorstädtischer Wohngebiete von Familien vorliegen. Ein Muster auf der Ebene eines Herstellers kann beispielsweise in einer Kooperation des Herstellers mit einem bestimmten Betreiber von Ladestationen gegeben sein, welche zu vergünstigten Ladebedingungen und/oder -preisen der Nutzer des betreffenden Herstellers bei den Ladestationen des Betreibers führt, was eine entsprechende Nutzung wahrscheinlicher macht. Auch bei modell- oder herstellerspezifischen Mustern ändert sich lediglich eine Wahrscheinlichkeit der Nachfrage, jedoch nicht der konkrete Ladebedarf.

In einer weiter vorteilhaften Ausgestaltung wird anhand einer Mehrzahl an verbindlichen Buchungen für die wenigstens eine Ladestation ein zweites statistisches Modell erzeugt, wobei das zweite statistische Modell für die Abschätzung der realen Nachfrage anhand der Anfragen herangezogen wird. Insbesondere erfolgt dies im Zusammenhang mit der Gesamtzahl an Ladevorgängen, welche zeitgleich zu den Ladevorgängen mit Buchung durchgeführt werden, sodass einer Anzahl und/oder Häufung der Buchungen über das zweite statistische Modell eine Aussagekraft für die reale zu erwartende Nachfrage nach einer Ladestation und somit über deren Verfügbarkeit zukommt, welche für das Verfahren nutzbar gemacht werden kann.

Die zweitgenannte Aufgabe wird erfindungsgemäß gelöst durch ein Verfahren zur assistierten Buchung einer Ladestation für ein Elektrofahrzeug, wobei für das Elektrofahrzeug ein konkreter Ladebedarf ermittelt wird, wobei in Abhängigkeit des ermittelten konkreten Ladebedarfs eine Anfrage hinsichtlich einer Verfügbarkeit wenigstens einer Ladestation ausgegeben wird, wobei für die wenigstens eine Ladestation die Wahrscheinlichkeit für eine Verfügbarkeit gemäß dem vorbeschriebenen Verfahren abgeschätzt und als Antwort auf die Anfrage ausgegeben wird, und wobei durch eine Kommunikationseinrichtung des Elektrofahrzeugs eine dem konkreten Ladebedarf entsprechende verbindliche Buchung für eine Bestätigung vorgeschlagen oder unmittelbar durchgeführt wird, wenn die Wahrscheinlichkeit für eine Verfügbarkeit der Ladestation unter einem Grenzwert liegt. Die für das Verfahren zur Prognose einer Verfügbarkeit wenigstens einer Ladestation und für dessen Weiterbildungen genannten Vorteile können hierbei sinngemäß auf das Verfahren zur assistierten Buchung einer Ladestation übertragen werden.

Insbesondere kann der Grenzwert vom konkreten Ladebedarf abhängen, sodass z.B. dieser umso höher gewählt wird, je geringer der aktuelle Ladestand des Elektrofahrzeugs ist, da weniger Reichweite für ein Aufsuchen von alternativen Ladestationen zur Verfügung steht.

Die Erfindung nennt weiter eine zentrale Steuereinheit für ein Leitsystem von Ladestationen für Elektrofahrzeuge, welche dazu eingerichtet ist, anhand einer Mehrzahl an empfangenen Anfragen hinsichtlich einer Verfügbarkeit wenigstens einer der Ladestationen eine Wahrscheinlichkeit für eine reale Verfügbarkeit der angefragten Ladestation zu einem zukünftigen Zeitpunkt abzuschätzen, wenn die Mehrzahl an Anfragen jeweils durch Elektrofahrzeuge infolge eines ermittelten, konkreten Ladebedarfs gestellt wurde. Die erfindungsgemäße zentrale Steuereinheit teilt die Vorteile des erfindungsgemäßen Verfahrens zur Prognose einer Verfügbarkeit wenigstens einer Ladestation; die für letzteres und für dessen Weiterbildungen angegebenen Vorteile können hierbei sinngemäß auf de zentrale Steuereinheit übertragen werden.

Nachfolgend wird ein Ausführungsbeispiel der Erfindung anhand einer Zeichnung näher erläutert. Hierbei zeigen jeweils schematisch:
- Fig. 1: in einer Karte eine Mehrzahl an Elektrofahrzeugen mit einem konkreten Ladebedarf an entsprechenden Ladestationen, und
- Fig. 2: in einer Karte die Situation nach Fig. 1, mit einem erhöhten Bedarf nach Ladevorgängen.

Einander entsprechende Teile und Größen sind in allen Figuren jeweils mit gleichen Bezugszeichen versehen.

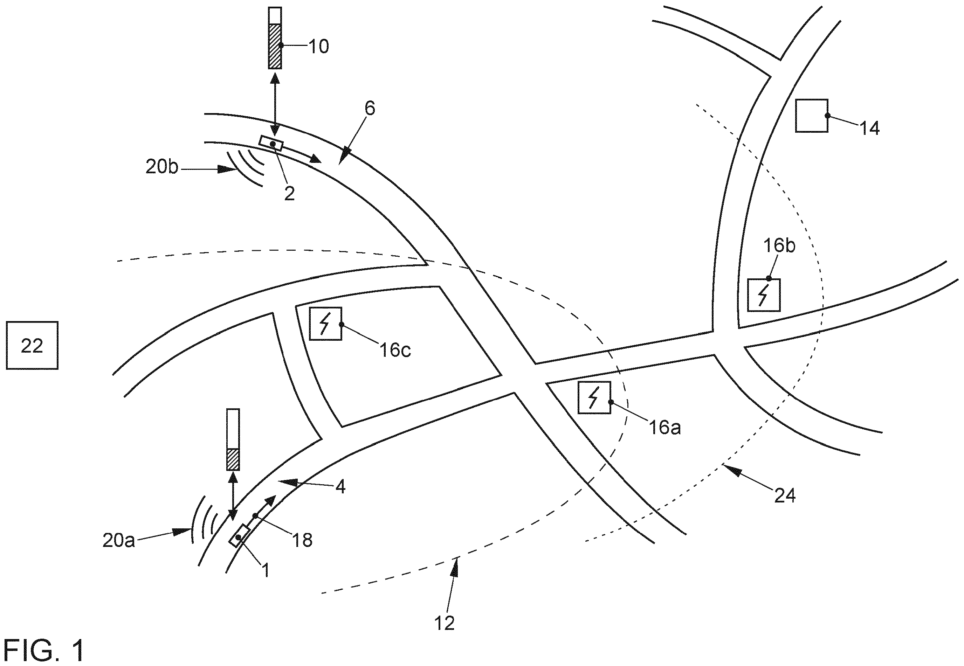

In Figur 1 sind schematisch in einer Karte ein erstes Elektrofahrzeug 1 und ein zweites Elektrofahrzeug 2 dargestellt. Das erste Fahrzeug 1 befindet sich hierbei auf einem ersten Straßenabschnitt 4, das zweite Elektrofahrzeug 2 auf einem Straßenabschnitt 6.dem ersten Fahrzeug 1 ist ein erster Ladestand 8 der betreffenden Batterie des ersten Elektrofahrzeug 1 zugeordnet, dem zweiten Elektrofahrzeug 2 entsprechend ein zweiter Ladestand 10 der betreffenden Batterie. Aus dem ersten Ladestand 8 und der Straßenführung, welche unmittelbar an den Straßenabschnitt 4 angrenzt, ergibt sich eine erste Reichweite 12 für das erste Elektrofahrzeug 1, welche in Figur 1 durch eine gestrichelte Linie dargestellt ist. Hierbei ist zu berücksichtigen, dass die erste Reichweite 12 in einer realen Fahrsituation möglicherweise nicht, wie in Figur 1 vereinfacht dargestellt, durch eine scharfe Linie begrenzt ist, sondern vielmehr durch einen Grenzbereich (beispielsweise infolge der geschwindigkeitsabhängigen Reibungskräfte und einem entsprechend höheren, nicht rückgewinnbaren Stromverbrauch bei höheren Geschwindigkeiten), welcher jedoch im Vergleich zur totalen Reichweite bei einem maximalen Ladestand vernachlässigbar in seiner eigenen Ausdehnung sein soll.

Für das anhand von Figur 1 gezeigte Beispiel haben sowohl das erste Elektrofahrzeug 1 als auch das zweite Elektrofahrzeug 2 ein gemeinsames Fahrtziel 14, welches jedoch keines der beiden Elektrofahrzeuge 1, 2 beim derzeitigen Ladestand 8 bzw. 10 ohne einen Ladevorgang erreichen kann. Dies bedeutet, dass sowohl das erste Elektrofahrzeug 1 als auch das zweite Fahrzeug 2 auf ihrer jeweiligen Fahrt zum Fahrtziel 14 jeweils einen Ladevorgang an einer der 3 Ladestationen 16a-c durchführen müssen. Um sicherzustellen, dass die gewünschte jeweilige Ladestation 16a-c zum Zeitpunkt für den angestrebten Ladevorgang nicht besetzt ist, kann vorab eine entsprechende Buchung bzw. Reservierung für einen gewünschten Zeitraum erfolgen. Wird eine solche Buchung nur "zur Sicherheit" infolge unklarer Verfügbarkeiten durchgeführt, aber am Ende nicht benötigt, ist dennoch für ein anderes Fahrzeug ein Ladevorgang nicht möglich, was dazu führen kann, dass mehr Ladestationen als eigentlich erforderlich vorgehalten werden müssen. Eine derartige Buchung ist zudem im Allgemeinen kostenpflichtig. Im folgenden soll nun ein Verfahren erklärt werden, welches vorab eine Prognose über eine Verfügbarkeit der Ladestationen 16a-c ermöglicht, sodass der Fahrer des ersten Elektrofahrzeug 1 und der Fahrer des zweiten Fahrzeugs 2 lediglich dann eine feste und ggf. kostenpflichtige Buchung der für sie jeweils gewünschten Ladestation 16a-c durchzuführen brauchen, wenn eine hinreichend hohe Auslastung der Ladestation 16a-c für den gewünschten Ladezeitraum zu erwarten ist, und somit eine freie Verfügbarkeit ohne eine vorausgehende Buchung nicht mit hinreichend hoher Sicherheit garantiert werden kann.

Das erste Elektrofahrzeug 1 fährt auf dem Straßenabschnitt 4 in eine ersten Fahrtrichtung 18. Hierbei sei angenommen, dass ein Navigationssystem des ersten Elektrofahrzeug 1 deaktiviert ist, bzw. dass Fahrtziel 14 nicht ins Navigationssystem eingegeben ist, sondern der Fahrer des ersten Elektrofahrzeug ein vielmehr ohne jegliche Navigationshilfe fährt. Auch ohne Kenntnis des Fahrtziels 14 kann jedoch anhand der ersten Fahrtrichtung 18, des ersten Ladestands und somit der ersten Reichweite 12 sowie anhand der Streckenführung der an den Straßenabschnitt 4 angrenzenden Straßen erkannt werden, dass das erste Elektrofahrzeug an einer der beiden Ladestation 16a, c einen Ladevorgang wird durchführen müssen. Anhand einer mittleren Fahrgeschwindigkeit des ersten Elektrofahrzeug 1 und dem jeweiligen Abstand zur Ladestation 16a bzw. 16c und gegebenenfalls Geschwindigkeitsbeschränkungen etc. in der Streckenführung zur jeweiligen Ladestation 16a, c kann nun ein Zeitpunkt ermittelt werden, an welchem das erste Elektrofahrzeug 1 mutmaßlich eine der beiden Ladestation 16a, c für einen Ladevorgang aufsuchen wird. Insofern wird hierbei ein konkreter Ladebedarf ermittelt, welche räumlich auf die beiden Ladestation 16a, c eingeschränkt ist, und die Ladestation 16b nicht umfasst, sowie zeitlich auf die jeweiligen mutmaßlichen Ankunftszeitpunkte (gegebenenfalls mit gewissen Toleranzen) beschränkt ist. Das erste Elektrofahrzeug 1 kann somit eine Anfrage 20a an eine zentrale Steuereinheit 22 eines Leitsystems versenden, welches eine Zuteilung und Buchung der Ladestation 16a-c steuert.

In einem Navigationssystem des zweiten Elektrofahrzeugs 2 ist das Fahrtziel 14 hinterlegt. Anhand des zweiten Ladestands 10 kann somit im zweiten Elektrofahrzeug die entsprechende zweite Reichweite 24 mit dem Fahrtziel 14 abgeglichen werden. Es ergibt sich, dass infolge des höheren zweiten Leitstands 10 das zweite Elektrofahrzeug alle 3 Ladestation 16a-c erreichen kann, jedoch voraussichtlich nicht ohne Ladevorgang bis zum Fahrtziel 14 durchkommen wird. Aufgrund der Kenntnis des Fahrtziels 14 im Navigationssystem des zweiten Elektrofahrzeugs 2 kann hierbei die Ladestation 16c als abgelegen verworfen werden. Relevant sind somit lediglich die Ladestation 16a und die Ladestation 16b. In ähnlicher Weise wie beim ersten Elektrofahrzeug 1 kann nun der jeweilige Abstand des zweiten Elektrofahrzeug 2 von der jeweiligen Ladestation 16a, b und hieraus anhand der mittleren Fahrgeschwindigkeit ein entsprechender Zeitpunkt für ein Eintreffen an der betreffenden Ladestation 16a, b bestimmt werden. Insofern wird auch für das zweite Elektrofahrzeug 2 ein konkreter Ladebedarf festgestellt, nämlich räumlich eingegrenzt auf die Ladestation 16a und 16b, während die Ladestation 16c verbrochen wird, und zeitlich eingegrenzt auf den jeweiligen Voraus berechneten Ankunftszeit. An der betreffenden Ladestation 16a bzw. 16b. Diesem konkreten Ladebedarf entsprechend übermittelt nun das zweite Elektrofahrzeug eine Anfrage 20b an die zentrale Steuereinheit, hinsichtlich der Verfügbarkeit der Ladestation in 16a und 16b zum gewünschten Zeitpunkt.

Der Anfrage 20a des ersten Elektrofahrzeug 1 kann hierbei überdies noch die Information beigefügt werden, dass der ermittelte konkrete Ladebedarf, welcher der Anfrage 20a zugrunde liegt, ohne Kenntnis des Fahrtziels 14 abgeschätzt wurde, sodass bei einer Vorhersage der realen Nachfrage nach den Ladestationen 16a-c durch die zentrale Steuereinheit 22 ein Ladevorgang des ersten Elektrofahrzeug 1 in der Ladestation 16a und der Ladestation 16c für ähnlich wahrscheinlich gewichtet wird. Eine derartige Gewichtung kann jedoch auch ohne Kenntnis des Fahrtziels 14 durch das Navigationssystem bei hinreichend begründeten, anderslautenden Informationen zum Fahrtziel 14 abgeändert werden, beispielsweise, wenn ein den konkreten Ladebedarf ermitteln des Steuersystem des ersten Elektrofahrzeug 1 Zugriff auf einen elektronischen Kalender des Fahrers des ersten Fahrzeugs 1 hat, und diese entsprechend einen Termin beim ersten Fahrtziel 14 eingetragen hat. In letzterem Fall kann die Wahrscheinlichkeit für einen Ladevorgang bei der Ladestation 16a durch das erste Elektrofahrzeug 1 entsprechend heraufgesetzt werden, während die Wahrscheinlichkeit für ein Laden bei der Ladestation 16c herabgesetzt wird. Liegt eine derartige Information jedoch nicht vor, so wird die Bewertung des konkreten Ladevorgangs Vorrang anhand der aktuellen ersten Fahrtrichtung 18, der Streckenführung in der Umgebung des aktuell befahrenen Straßenabschnitts 4 sowie anhand des ersten Ladestands 8 und der hieraus resultierenden ersten Reichweite 12 erfolgen.

Die zentrale Steuereinheit 22 hat nun also eine Anfrage 20c des ersten Elektrofahrzeugs 1 bezüglich der Ladestation 16a und 16c (bei vergleichbarer Wahrscheinlichkeit) sowie eine Anfrage 20b des zweiten Elektrofahrzeugs für die Ladestationen 16a und 16b. Infolgedessen wird durch die Anfragen 20a, 20b eine potenziell erhöhte reale Nachfrage nach der Ladestation 16a prognostiziert. Da sich infolge ähnlicher Abstände der beiden Elektrofahrzeuge 1, 2 zu dieser Ladestation 16a die mutmaßlichen Ladezeiträume, so wie sie in der jeweiligen Anfrage 20a bzw. 20b an die zentrale Steuereinheit 22 übermittelt wurden, überlappen würden, wird von der zentralen Steuereinheit 22 an das zweite Elektrofahrzeug 2 eine Empfehlung ausgegeben, die Ladestation 16b aufzusuchen. Entsprechend wird an das erste Elektrofahrzeug ein Vorschlag ausgegeben, die erste Ladestation 16a vorsichtshalber verbindlich zu buchen, falls diese tatsächlich auf der gewünschten Fahrtroute liegt, da für diese Ladestation 16a auch eine Anfrage durch das zweite Elektrofahrzeug 2 vorliegt. Auch für dieses kann zusätzlich zur Empfehlung, die Ladestation 16b aufzusuchen, ein entsprechender Vorschlag für eine verbindliche (und ggf. kostenpflichtige) Buchung ausgegeben werden. Es ist jedoch zu erwarten, dass vorliegend der Fahrer des zweiten Elektrofahrzeugs 2 ohne verbindliche Buchung die Ladestation 16b nutzen wird, sodass zumindest durch diesen Fahrer keine Überbuchung erfolgt.

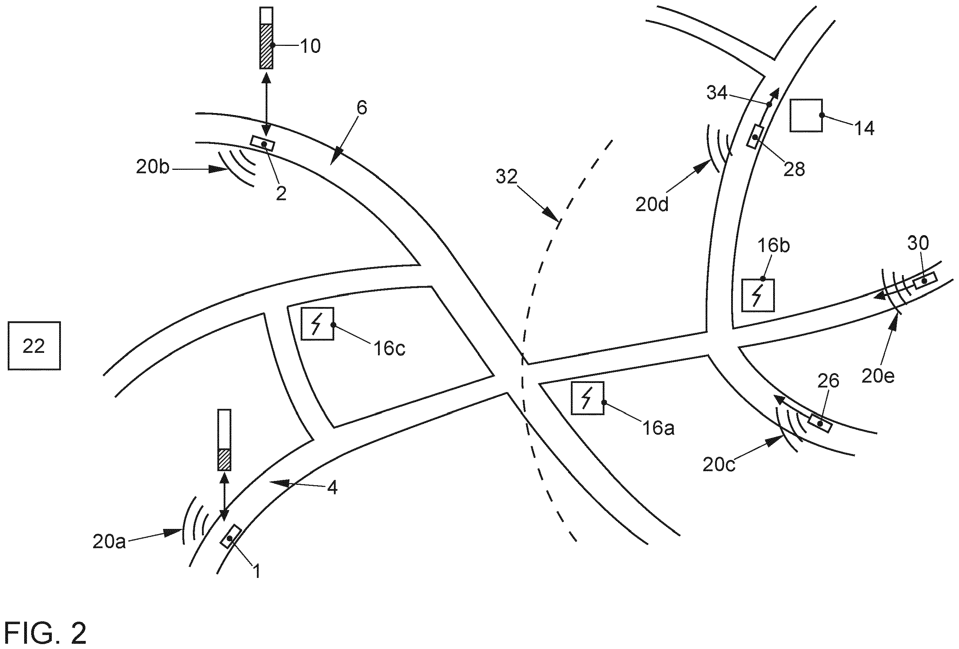

In Figur 2 ist schematisch dieselbe Situation wie in Fig. 1 dargestellt. Jedoch sind vorliegend noch drei weitere Elektrofahrzeuge 26, 28, 30 unterwegs, deren jeweilige interne Systeme ebenfalls einen konkreten Ladebedarf ermittelt haben. Entsprechend werden Anfragen 20c-e an die zentrale Steuereinheit 22 gesendet. Die jeweilige Reichweite 32 sei hierbei für die drei weiteren Elektrofahrzeuge 26, 28 30 jeweils als im Wesentlichen gleich angenommen (gestrichelte Linie), die Reichweiten für das erste und das zweite Elektrofahrzeug 1 bzw. 2 wie in Fig. 1 dargestellt. Es ergibt sich nun für die beiden Ladestationen 16a, 16b eine deutlich erhöhte Wahrscheinlichkeit eines realen Ladevorganges. Während das Elektrofahrzeug 28 infolge seiner Fahrtrichtung 34 mutmaßlich nicht zu dieser Nachfrage beiträgt, sondern seinen Ladevorgang an einer weiteren, nicht dargestellten Ladestation anstrebt, haben die Elektrofahrzeuge 26 und 30 einen konkreten Ladebedarf, welcher auf die Ladestationen 16a und 16b gerichtet ist. Im vorliegenden Fall würde also den Fahrern der Elektrofahrzeuge 26 und 30 jeweils eine verbindliche Buchung der Ladestation 16a bzw. 16b für einen unmittelbar bevorstehende Ladezeitraum zur Bestätigung werden, während den Fahrern des ersten bzw. zweiten Elektrofahrzeugs 1, 2 eine verbindliche Buchung der Ladestation 16a bzw. 16b im nachfolgenden Ladezeitraum zur Bestätigung vorgeschlagen wird.

Obwohl die Erfindung im Detail durch das bevorzugte Ausführungsbeispiel näher illustriert und beschrieben wurde, ist die Erfindung nicht durch dieses Ausführungsbeispiel eingeschränkt. Andere Variationen können vom Fachmann hieraus abgeleitet werden, ohne den Schutzumfang der Erfindung zu verlassen.

### Bezugszeichenliste

- 1: erstes Elektrofahrzeug
- 2: zweites Elektrofahrzeug
- 4: Straßenabschnitt
- 6: Straßenabschnitt
- 8: erster Ladestand
- 10: zweiter Ladestand
- 12: erste Reichweite
- 14: Fahrtziel
- 16a-c: Ladestation
- 18: erste Fahrtrichtung
- 20: Anfrage
- 22: zentrale Steuereinheit
- 24: zweite Reichweite
- 26: (weiteres) Elektrofahrzeug
- 28: (weiteres) Elektrofahrzeug
- 30: (weiteres) Elektrofahrzeug
- 32: Reichweite
- 34: Fahrtrichtung

## Patentansprüche

1. Verfahren zur Prognose einer Verfügbarkeit wenigstens einer Ladestation (16a-c) für ein Elektrofahrzeug (1, 2, 26, 28, 30),
wobei für eine Mehrzahl an Elektrofahrzeugen (1, 2, 26, 28, 30) jeweils ein konkreter Ladebedarf ermittelt wird,
wobei jedes der Elektrofahrzeuge (1, 2, 26, 28, 30) in Abhängigkeit des konkreten Ladebedarfs eine Anfrage (20a-e) hinsichtlich einer Verfügbarkeit wenigstens einer Ladestation (16a-c) ausgibt, und
wobei für die wenigstens eine Ladestation (16a-c) anhand der Anfragen (20a-e) der Elektrofahrzeuge (1, 2, 26, 28, 30) eine reale Nachfrage nach einem Ladevorgang abgeschätzt wird, und hieraus eine erste Wahrscheinlichkeit für eine Verfügbarkeit der wenigstens einen Ladestation (16a-c) zu einem zukünftigen Zeitpunkt ermittelt wird.

2. Verfahren nach Anspruch 1,
wobei jeweils für ein Elektrofahrzeug (1, 2, 26, 28, 30) eine Fahrtroute ermittelt oder abgeschätzt wird und/oder ein Ladestand (8, 10) ermittelt wird, und
wobei der konkrete Ladebedarf anhand der Fahrtroute und/oder anhand des Ladestands (8, 10) ermittelt wird.

3. Verfahren nach Anspruch 2,
wobei die Fahrtroute anhand einer Eingabe eines Fahrtziels (14)in ein Navigationssystem ermittelt wird, oder
wobei eine aktuelle Position des Elektrofahrzeugs (1, 2, 26, 28, 30) ermittelt wird, und die Fahrtroute des Elektrofahrzeugs (1, 2, 26, 28, 30) anhand der ermittelten aktuellen Position abgeschätzt wird.

4. Verfahren nach Anspruch 2 oder Anspruch 3,
wobei für ein Abschätzen der Fahrtroute von einem Fahrer des Elektrofahrzeugs (1, 2, 26, 28, 30) in einem elektronischen Terminkalender und/oder in sozialen Netzwerken vermerkte Daten herangezogen werden.

5. Verfahren nach einem der vorhergehenden Ansprüche,
wobei für einen konkreten Ladebedarf ein Wahrscheinlichkeitswert dafür ermittelt oder abgeschätzt wird, zu einem bestimmten Zeitpunkt innerhalb eines räumlich begrenzten Bereiches einen Ladevorgang durchzuführen oder durchführen zu müssen.

6. Verfahren nach einem der vorhergehenden Ansprüche,
wobei für die Mehrzahl an Elektrofahrzeugen (1, 2, 26, 28, 30) nach einer jeweiligen Anfrage (20a-e) ein Ladevorgang erfasst wird,
wobei anhand der erfassten Ladevorgänge der Elektrofahrzeuge (1, 2, 26, 28, 30) und anhand der entsprechenden Anfragen (20a-e) ein erstes statistisches Modell entwickelt wird, und
wobei das erste statistische Modell für die Abschätzung der realen Nachfrage anhand der Anfragen (20a-e) herangezogen wird.

7. Verfahren nach Anspruch 6,
wobei in das erste statistische Modell hinsichtlich jeweils einer einen konkreten Ladebedarf repräsentierenden Anfrage (20a-e) und ihrer entsprechenden Zuordnung zu einem erfassten Ladevorgang
- individuelle Muster auf der Ebene einzelner Fahrer der zweiten Elektrofahrzeuge (1, 2, 26, 28, 30) und/oder
- modellspezifische Muster auf der Ebene einer gegebenen Baureihe und/oder
- herstellerspezifische Muster auf der Ebene einer Fahrzeugflotte eines Herstellers mit einbezogen werden.

8. Verfahren nach einem der vorhergehenden Ansprüche,
wobei anhand einer Mehrzahl an verbindlichen Buchungen für die wenigstens eine Ladestation (16a-c) ein zweites statistisches Modell erzeugt, und
wobei das zweite statistische Modell für die Abschätzung der realen Nachfrage anhand der Anfragen (20a-e) herangezogen wird.

9. Verfahren zur assistierten Buchung einer Ladestation für ein Elektrofahrzeug (1, 2, 26, 28, 30),
wobei für das Elektrofahrzeug (1, 2, 26, 28, 30) ein konkreter Ladebedarf ermittelt wird,
wobei in Abhängigkeit des ermittelten konkreten Ladebedarfs eine Anfrage (20a-e) hinsichtlich einer Verfügbarkeit wenigstens einer Ladestation (16a-c) ausgegeben wird,
wobei für die wenigstens eine Ladestation (16a-c) die Wahrscheinlichkeit für eine Verfügbarkeit gemäß dem Verfahren nach einem der vorhergehenden Ansprüche abgeschätzt und als Antwort auf die Anfrage (20a-e) ausgegeben wird, und
wobei durch eine Kommunikationseinrichtung des Elektrofahrzeugs (1, 2, 26, 28, 30) eine dem konkreten Ladebedarf entsprechende verbindliche Buchung für eine Bestätigung vorgeschlagen oder unmittelbar durchgeführt wird, wenn die Wahrscheinlichkeit für eine Verfügbarkeit der Ladestation (16a-c) unter einem Grenzwert liegt.

10. Zentrale Steuereinheit (22) für ein Leitsystem von Ladestationen (16a-c) für Elektrofahrzeuge (1, 2, 26, 28, 30), welche dazu eingerichtet ist, anhand einer Mehrzahl an empfangenen Anfragen (20a-e) hinsichtlich einer Verfügbarkeit wenigstens einer der Ladestationen (16a-c) eine Wahrscheinlichkeit für eine reale Verfügbarkeit der angefragten Ladestation (16a-c) zu einem zukünftigen Zeitpunkt abzuschätzen, wenn die Mehrzahl an Anfragen (20a-e) jeweils durch Elektrofahrzeuge (1, 2, 26, 28, 30) infolge eines ermittelten, konkreten Ladebedarfs gestellt wurde.
